Europäisches Patentamt

European Patent Office

Office européen des brevets

(11) Publication number: **0 407 226 A2**

# EUROPEAN PATENT APPLICATION

(21) Application number: 90307441.7

(22) Date of filing: 06.07.90

(30) Priority: 06.07.89 GB 8915542

(43) Date of publication of application:
09.01.91 Bulletin 91/02

(84) Designated Contracting States:
DE FR GB IT SE

(71) Applicant: HUNTING ENGINEERING LIMITED
Reddings Wood Ampthill
Bedfordshire MK45 2HD(GB)

(51) Int. Cl.⁵: **H04B 5/00**

(72) Inventor: **Bartram, David Vaughan**
**56 Grange Lane**
**Bromham Bedford MK43 8NS(GB)**

(74) Representative: **Horton, Andrew Robert Grant**
**et al**
**BOWLES HORTON Felden House Dower**
**Mews High Street**
**Berkhamsted Hertfordshire HP4 2BL(GB)**

(54) Leaky feeder transmission system.

㊼ A leaky feeder transmission system in which boost amplifiers are provided for respective sections of leaky feeder. Auto-transformer power dividers are provided to facilitate duplex propagation.

## FIG.3

EP 0 407 226 A2

## SIGNAL AMPLIFICATION

This invention relates to communications systems incorporating so-called leaky feeder cables.

Leaky feeder communication systems are employed in environments where full radio communication using high power broadcasting is undesirable, for example in terms of feasibility because of channel availability and regulatory conditions, or due to potential hazard. Nevertheless in such environments radiative communication may still be required for purposes such as communication between a mobile station and a base or between mobiles. With a leaky feeder cable distributed low power transmission occurs along the length of the cable, the cable being disposed along a route such that at any point a mobile station is within range of the low power transmission. In a converse manner the leaky feeder cable also picks up externally generated signals.

A typical leaky feeder cable may comprise a coaxial cable which has deliberately imperfect screening so that radio frequency signals being conducted along the cable progressively leak from the cable, and externally generated signals are picked up by the cable. Our copending UK patent application No. 9013909.8 describes such a system with an additional external housing that itself has discontinuities to enable ingress and egress of signals.

One problem that arises with leaky feeder systems is that the line losses progressively reduce the radiated signal strength with distance from the transmitter. This limits the effective maximum line length and therefore limits the overall communication range of the system.

The present invention is directed towards increasing the potential range of leaky feeder communication systems.

The invention is now described by way of example with reference to the accompanying drawings in which:

Figure 1 is a graph of attenuation against line length;

Figure 2 illustrates a duplex amplifiying stage for use in a leaky feeder system;

Figure 3 illustrates the stage of Figure 2 in more detail;

Figure 4 illustrates a base station and part of a leaky feeder system;

Figure 5 illustrates a power divider; and

Figure 6 illustrates part of a two-wire system.

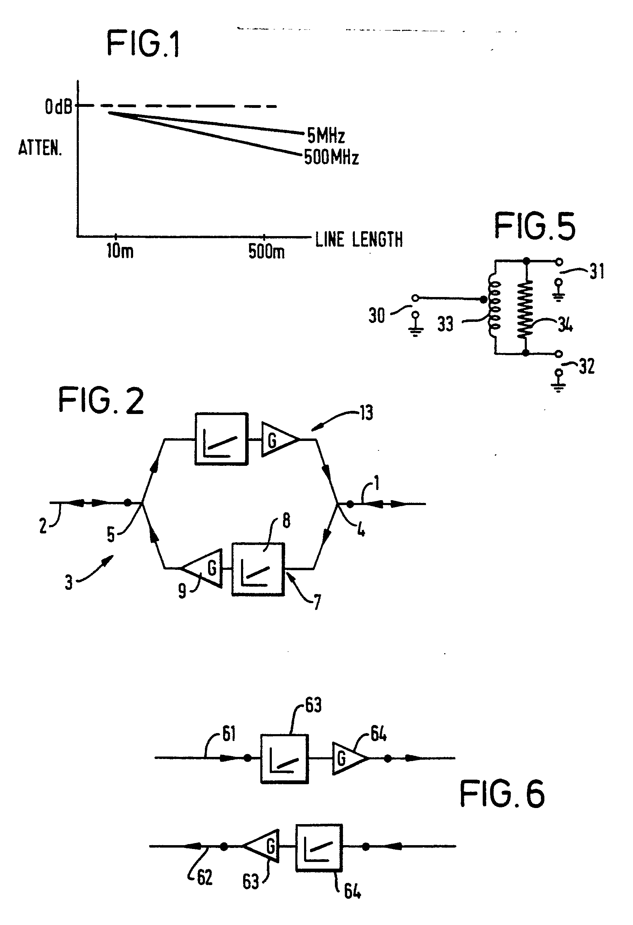

Referring firstly to figure 1, a typical attenuation/frequency characteristic of a leaky feeder cable over a 500 metre length is shown. At a frequency of 35MHz the rate of attenuation may be around 3dB per 100 metre length. At higher frequencies the attenuation rate is greater, for example at 500MHz it may be around 10dB per 100 metres. These rates of attenuation limit the maximum useful length of the cable to about 2000 metres, or less depending upon the frequency and nature of signals transmitted.

The present invention is principally concerned with signal frequencies that may be in the range of 10MHz to 500MHz. Preferably several transmission channels each utilising a band of several MHz (say for example 10MHz bands) are operated, with transmission in both directions, i.e. from a base station or mobile station to a mobile station and vice versa. The available total bandwidth between 10 and 500MHz should generally enable each transmitter to utilise different pre-assigned channels, but for configurations enabling duplication of channel selection a priority interrogation control system can be incorporated.

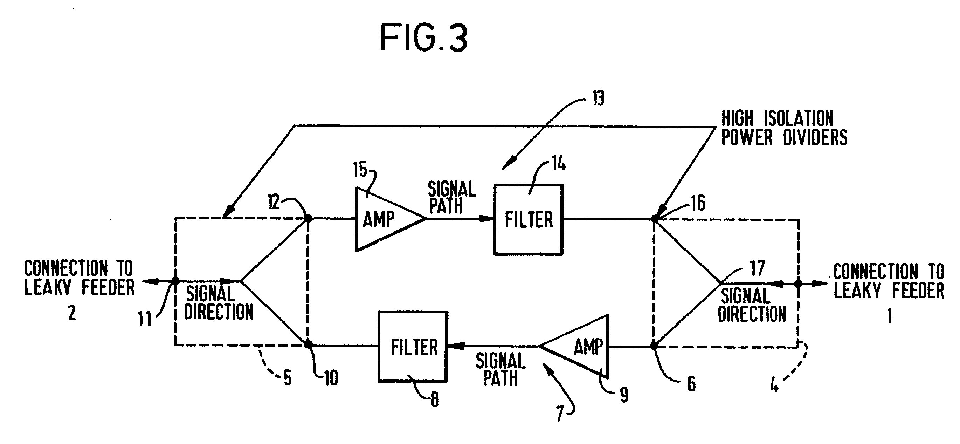

A preferred embodiment of the invention is illustrated in Figures 2 and 3 in which a first leaky feeder cable 1 is connected to a second leaky feeder cable 2 via a repeater 3. The leaky feeder cables 1 and 2 may be carrying signals in both directions. The repeater comprises asymmetric power couplers 4 and 5.

Considering firstly power coupler 4, and signals incident into the repeater from leaky feeder 1, the incident signals are predominantly diverted into an output port 6 (Figure3) of power divider 4 and onward into a branch 7 of the repeater. This signal is then filtered by a filter 8 to remove unwanted signals and the filtered signal is then amplified by amplifier 9 and applied as an input to a port 10 (Figure 3) of a power divider 5. The amplified signal is then output from the power divider 5 via port 11 and onward into leaky feeder 2, which then continues to conduct onward in the direction leftwards as viewed in the drawing, but at an increased power level compared with the signal incident into coupler 4.

Signals travelling from left to right as viewed in the drawings undergo a similar filtering and amplification process, in this instance the signals being incident into port 11 of power divider 5, routed predominantly via an output port 12 into a branch 13 of the repeater, through a filter 14 and amplifier 15 into a port 16 of power divider 4 and out via port 17 into leaky feeder cable 1. It will be realised that signal processing operations other than amplification and filtering may also be incorporated into the branches 7 and 13.

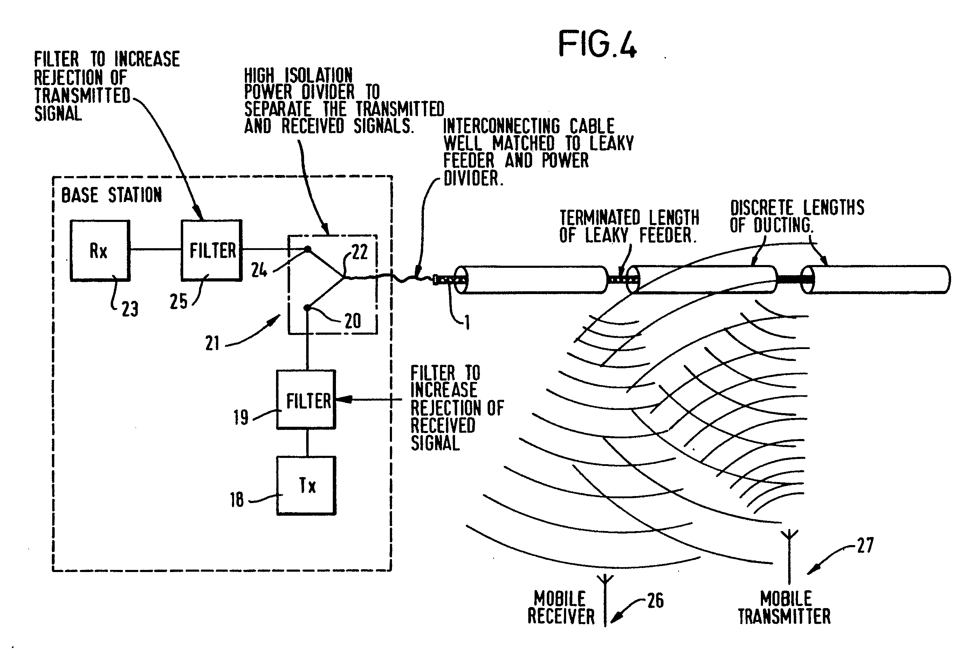

Figure 4 illustrates schematically a base station launching and receiving signals. The base station is connected to a leaky feeder cable 1 which is connected via one or more repeaters (not shown) to further lengths of leaky feeder cable and eventually to a termination (not shown). The termination is impedance-matched to the cable to prevent end reflection.

The base station comprises a transmitter 18 connected via a filter 19 to a port 20 of an asymmetric power divider 21. Transmitted signals pass out into the leaky feeder via port 22 of the power divider. The base station also comprises a receiver 23 which receives signals returning to the base station from the leaky feeder cable, these signals being input to port 24 of the power divider and output predominantly via port 22. A filter 25 filters out residual transmitted signal from transmitter 18 that appears at port 24, and similarly filter 19 removes unwanted received signal appearing as an output at port 20. Power for the repeaters is transmitted from the base station along the leaky feeder and transferred forward for the next repeater.

Signals radiated by the leaky feeder are picked up by a mobile receiver 26, and signals may be picked up by the leaky feeder from a mobile transmitter 27. In the illustration the leaky feeder is disposed in a duct or housing which is provided with discontinuities such as perforations, slots or discrete lengths of ducting. This ducting may constitute ruggedisation for the leaky feeder but also may provide RF shielding other than at the discontinuities in order to minimise pick up of ambient RF radiation.

The power dividers utilised in the embodiment may be as illustrated in Figure 5. Power dividers of this type are known and are for example available from Minicircuits, Brooklyn, New York 11235-0003 (USA).

The power divider is a three port device having ports 30, 31 and 32, and works generally in one direction as a power divider and in the other direction as a power combiner. Thus signal input to a "common" port port 30 is divided as output between the pair of ports 31 and 32, and signals input to port 31 and/or port 32 appear as output at port 30. Port 30 is connected to a tap, normally a centre tap on an auto-transformer 33 which is connected between ports 31 and 32, which are also connected by a resistor 34. Provided that the impedances (e.g. the impedance of the cable, the input impedance of the amplifier 15 and the output impedance of the filter 8 in figure 3) are well matched across the transformer, the ports of the pair 31, 32 are substantially isolated from each other.

The high degree of isolation between ports 31 and 32, which correspond to ports 6 and 16 and 10 and 12 of power dividers 4 and 5 enables isolation between the two directions of signal path shown in Figures 2 and 3 which is necessary in order to inhibit oscillations.

The gain of the repeater stage needs to be sufficient to compensate for transmission losses in the preceding length of leaky feeder and for the insertion loss of the repeater which is essentially 3dB for each power divider. As mentioned earlier the loss in the leaky feeder cable varies with frequency, and to compensate for this feedback is added to the amplifiers. The filters may also compensate for the frequency response of the cable before wide-band amplification to restore power levels.

Typically, the separation between input and output terminals from a node will be 20dB, the amplifier gain is linear between 5 and 500MHz after correction for the frequency characteristic of the preceding cable.

Figure 6 illustrates a system in which signal in a given direction is restricted to a respective one of the cables 61 and 62. Each section of each cable has a respective filter 63 and amplifier 64 providing a charateristic whci compensates for the loss shown in Figure 1.

It will be appreciated from the bi-directional nature of the system described, that such a cascaded arrangement may be utilised both to radiate and to receive wide-band radio frequency signals simultaneously. In receiving from a mobile station, it is desirable that the emission beam width be restricted to minimise the incremental length of feeder illuminated by the beam at any moment. When it illuminates the region of a boost amplifier, then two signals of similar form but differing in time will appear at the input of the following length of cable, but they will differ significantly in amplitude, and the larger signal may be easily discerned.

Depending upon the precise details of the cables employed and the nature of signal to be carried, the length of continuous length cable in such a system may be typically between 50 and 2000 m, and the effective length of the feeder may be extended indefinitely by cascading lengths of feeder and active filters and couplers.

Finally, it will also be appreciated that frequency discrimination may be consciously employed to define the performance of such a line for a particular purpose.

**Claims**

1. A leaky feeder transmission system in which each of a multiplicity of sections of leaky feeder has a respective amplifying and filtering stage for the compensation of loss in the section.

2. A leaky feeder transmission system according to claim 1 in which are respective amplifying and filtering stage is provided for each direction of propagation of signals along a respective section.

3. A leaky feeder transmission system in which a leaky feeder is connected to a common port of an auto-transformer power divider having two substantially mutually isolated ports which are connected to means for propagating or processing signals in respective opposite directions of propagation.

4. A leaky feeder transmission system according to claim 3 in which the said means are a transmitter and a receiver respectively.

5. A leaky feeder transmission system according to claim 4 in which the said means are respective amplifiers and filters for respective ones of two adjacent section of leaky feeder.

FIG.1

FIG.5

FIG.2

FIG.6

# FIG.3

HIGH ISOLATION
POWER DIVIDERS

13

15

SIGNAL
PATH

14

12

AMP

FILTER

16

CONNECTION TO
LEAKY FEEDER
2

11

SIGNAL
DIRECTION

17

CONNECTION TO
LEAKY FEEDER
1

SIGNAL
DIRECTION

5      10

FILTER

8

SIGNAL
PATH

7

AMP

9

6

4

EP 0 407 226 A2

# FIG.4

FILTER TO INCREASE REJECTION OF TRANSMITTED SIGNAL

HIGH ISOLATION POWER DIVIDER TO SEPARATE THE TRANSMITTED AND RECEIVED SIGNALS.

INTERCONNECTING CABLE WELL MATCHED TO LEAKY FEEDER AND POWER DIVIDER.

TERMINATED LENGTH OF LEAKY FEEDER.

DISCRETE LENGTHS OF DUCTING.

BASE STATION

Rx

FILTER

FILTER TO INCREASE REJECTION OF RECEIVED SIGNAL

Tx

MOBILE RECEIVER

MOBILE TRANSMITTER

EP 0 407 226 A2